# EUROPÄISCHE PATENTSCHRIFT

(11) **EP 2 834 081 B1**
(45) Veröffentlichungstag und Bekanntmachung des Hinweises auf die Patenterteilung: **02.09.2015**
(21) Anmeldenummer: 13714877.1
(22) Anmeldetag: 21.03.2013
(51) Int. Cl.: B60B 3/00, B60B 3/08, B60B 3/10, B60B 21/10, B60B 25/00

(54) **MEHRTEILIGES FLUGZEUGRAD**
MULTIPART AIRPLANE WHEEL
ROUE D'AVION EN PLUSIEURS ÉLÉMENTS

(30) Priorität: 05.04.2012 DE 102012103004; 05.04.2012 DE 202012101252 U
(43) Veröffentlichungstag der Anmeldung: 11.02.2015
(73) Patentinhaber: Otto Fuchs KG, 58540 Meinerzhagen (DE)
(72) Erfinder: GIESSL, Andreas, 37120 Bovenden (DE); HERMANS, Hendrik, 48151 Münster (DE); SCHWEIZER, Nicole, 85354 Freising (DE); LAVEUVE, Dominik, 64287 Darmstadt (DE); IHNE, Jörg, 58840 Plettenberg (DE); BOSE, Sven Chandra, 58540 Meinerzhagen (DE)
(74) Vertreter: Haverkamp, Jens
(86) Internationale Anmeldenummer: PCT/EP2013/055879
(87) Internationale Veröffentlichungsnummer: WO 2013/149838

(56) Entgegenhaltungen:
- EP-A2- 2 143 635
- DE-A1- 3 433 549
- GB-A- 1 380 267
- US-A- 2 267 263
- US-A- 2 998 282

## Beschreibung

Gegenstand der Erfindung ist ein mehrteiliges Flugzeugrad, umfassend ein inneres Radteil und ein äußeres Radteil, von denen jedes ein Nabenteil, einen Felgenbettabschnitt und ein Felgenhorn sowie eine den Felgenbettabschnitt mit dem Nabenteil verbindende Stützstruktur aufweist, welche beiden Radteile zum Ausbilden des Flugzeugrades im Bereich ihrer Stützstruktur lösbar mechanisch miteinander verbunden sind, wobei die Stützstruktur mehrgliederig ausgeführt ist und über ein erstes Stützstrukturteil, mit dem das äußere Radteil an die Stützstruktur des inneren Radteils angeschlossen ist, und über ein zweites Stützstrukturteil verfügt, das an das Nabenteil angeschlossen ist.

Flugzeugräder der in Rede stehenden Art sind aus zwei Radteilen zusammengesetzt. Diese Radteile werden mitunter auch als Radhälften angesprochen, auch wenn beide Radteile in axialer Richtung unterschiedlich dimensioniert sind und somit nicht jedes Radteil tatsächlich einer geometrischen Hälfte des Rades entspricht. Ein solcher Aufbau eines Flugzeugrades wird benötigt, damit zum Montieren und Demontieren eines Reifens das Felgenbett zugänglich wird. Aus diesem Grunde befindet sich die Teilungsebene in Querebene zur Drehachse. Der Flugzeugreifen kann dann, ohne mit seinen Schultern über ein Felgenhorn hinweggeführt werden zu müssen, mit der einen Schulter auf den Felgenbettabschnitt des einen Radteils und mit seiner anderen Schulter auf den Felgenbettabschnitt des anderen Radteils aufgeschoben werden, bevor bei einer Montage die beiden Radteile mit Bolzen miteinander verschraubt werden. Jedes Radteil eines solchen Flugzeugrades umfasst ein Nabenteil, welches unter Zwischenschaltung eines Lagers an die Radachse angeschlossen ist. An den Felgenbettabschnitt jedes Radteils ist an seinem von dem anderen Radteil wegweisenden Abschluss ein Felgenhorn angeformt. Abgestützt ist das Felgenbett an dem Nabenteil durch eine Radschüssel, die im Rahmen dieser Ausführungen allgemein als Stützstruktur bezeichnet wird. Die Stützstrukturen der beiden Radteile grenzen bereichsweise aneinander. In diesem Bereich sind zum Ausbilden des Rades die beiden Radteile mechanisch mittels Schraubbolzen miteinander verbunden. Ein derartiges Flugzeugrad ist aus US 2 998 282 bekannt.

Es versteht sich, dass die Radteile den hohen Beanspruchungen beim Aufsetzen bei einer Landung und beim Betrieb auf dem Boden genügen müssen. Neben einer solchen mechanischen Belastung müssen die Flugzeugräder, wenn gebremst, zusätzlich der beim Bremsen entstehenden Wärmeentwicklung sowie Korrosionsbelastungen Stand halten. Aus diesem Grunde und aus Gewichtsgründen werden für die Herstellung derartiger Flugzeugräder hochfeste Aluminiumlegierungen eingesetzt. Obwohl zum Herstellen von Flugzeugrädern bereits Leichtmetalllegierungen eingesetzt werden, wäre es wünschenswert, wenn diese hinsichtlich ihres Gewichtes optimiert und damit leichter bauend werden könnten. Dieses gilt vor allem in Bezug auf größere Flugzeuge, die nicht nur eine Vielzahl an Rädern aufweisen, sondern bei denen jedes Rad bis zu 100 kg oder auch mehr wiegen kann.

Zur Gewichtsersparnis von Flugzeugrädern ist in EP 2 143 635 A2 vorgeschlagen worden, die Radteile nach Art einer Skelettbauweise herzustellen. Als Skelett dient ein Metallkörper, durch den die Grundform des Radteils vorgegeben ist. Ausgekleidet bzw. ummantelt ist dieses Metallskelett mit einem FRP-Material (FRP: Fibre Reinforced Plastic, zu Deutsch: Faserverstärkter Kunststoff). Bei diesem Konzept wird der Ansatz verfolgt, durch die Skelettbauweise das Gewicht zu reduzieren. Es wäre jedoch wünschenswert, wenn eine weitere Reduzierung des Radgewichtes möglich wäre.

Aus GB 1 380 267 A ist ein mehrteiliges Flugzeugrad bekannt, wobei Teile des Rades aus Kohlefaser verstärktem Material hergestellt sind. Bei diesem vorbekannten Flugzeugrad sind an ein gemeinsames Nabenteil zwei Radteile angeschlossen. Das das jeweilige Felgenhorn mit dem Nabenteil verbindende Bauteil ist aus einem faserverstärkten Kunststoff hergestellt.

US 3 357 747 beschreibt ein Flugzeugrad, bei dem die beiden Radteile aus faserverstärktem Kunststoff gefertigt sind. Der Aufbau des in diesem Dokument beschriebenen Flugzeugrades entspricht prinzipiell dem aus US 2 998 282 bekannten Aufbau.

Aus DE 10 2010 036 611 A1 ist ein Fahrzeugrad bekannt, bei dem das die Felgenhörner verbindende Felgenbett aus einem Faserverbundwerkstoff gefertigt ist.

Ausgehend von dem vorstehend diskutierten Stand der Technik liegt der Erfindung daher die Aufgabe zugrunde, ein eingangs genanntes, gattungsgemäßes Flugzeugrad dergestalt weiterzubilden, dass dieses hinsichtlich seines Gewichtes in Bezug auf die vorbeschriebenen Anforderungen aus der Luftfahrtindustrie verbessert ist.

Gelöst wird diese Aufgabe erfindungsgemäß durch ein mehrteiliges Flugzeugrad der eingangs genannten Art, bei dem die Stützstruktur mehrgliederig ausgeführt ist und über ein erstes Stützstrukturteil, mit dem dieses Radteil an die Stützstruktur des anderen Radteils angeschlossen ist, und über ein zweites Stützstrukturteil verfügt, das an das Nabenteil angeschlossen ist.
Bei diesem mehrteiligen Flugzeugrad ist zumindest eines der beiden Radteile als Verbundradteil konzipiert, wobei das Nabenteil ein Metallteil ist und zumindest die Stützstruktur aus einem FRP-Material gefertigt ist. Bei einem ungebremsten Flugzeugrad können ohne weiteres beide Radteile nach diesem Konzept hergestellt sein. Prinzipiell ist dieses auch bei einem gebremsten Rad möglich, jedoch ist dann dasjenige Radteil aus einem besonders wärmebeständigen Kunststoff zu fertigen, auf welches die Bremse wirkt bzw. welchem Radteil die Radbremse zugeordnet ist. Das andere Radteil, das insofern als kaltes Radteil angesprochen werden kann, muss diesen besonders hohen Temperaturanforderungen nicht genügen. Vielmehr kann an dieser Stelle daher ein kostengünstiger Kunststoff eingesetzt werden.

Bei der vorbeschriebenen Konzeption steht ein Aufbau des Radteils im Vordergrund, bei dem in Abhängigkeit von der jeweiligen Funktionalität eines Radteilbestandteils ein für die Realisierung dieser Funktionalität den jeweiligen Anforderungen genügendes, jedoch gewichtsoptimiertes Material verwendet wird. Dieses erlaubt den Einsatz von Metallbestandteilen beschränkt auf diejenigen Elemente in einem solchen Radteil, die einer besonderen mechanischen und/oder thermischen Belastung ausgesetzt sind. Aus diesem Grunde bietet es sich an, das Nabenteil als Metallteil, insbesondere aus einer Leichtmetalllegierung herzustellen. Diesen Teil des Radteils aus Leichtmetall und nicht aus einem Bauteil aus FRP-Material herzustellen, bietet sich auch vor dem Hintergrund an, dass an dieser Stelle eine Gewichtsersparnis nur relativ gering wäre. Mit diesem Konzept wird man vor allem diejenigen Radteilbestandteile aus einem FRP-Material herstellen, bei denen der Einsatz dieses Materials, eine nennenswerte Gewichtsersparnis zur Folge hat. Dieses ist vor allem im Bereich der Stützstruktur sowie im Bereich des Felgenbettabschnittes und auch im Bereich des Felgenhorns möglich, so dass diese insgesamt aus einem FRP-Material hergestellt sind. Gerade in Bezug auf die Stützstruktur können die vielfältigen Formgestaltungsmöglichkeiten, die der Einsatz eines solchen Materials erlaubt, zur Gewichtsoptimierung ausgeschöpft werden. Durch die Möglichkeiten, die in der Herstellung dieses Bestandteiles eines Flugzeugradteils begründet sind, lässt sich die Stützstruktur nicht nur gewichtsoptimiert aus FRP-Material herstellen. Die Struktur kann auch in Bezug auf eine Krafteinleitung in die Radnabe anders gestaltet werden, als dieses mit einem Einsatz herkömmlicher Materialien der Fall ist. Dieses bietet sich vor allem dann an, wenn neben der Stützstruktur zumindest auch der Felgenbettabschnitt aus einem FRP-Material gefertigt ist. Während vorbekannte Flugzeugräder als Stützstruktur eine Schüssel aufweisen, mithin ein umfänglich durchgehendes Bauteil, in das ggfs. Belüftungsöffnungen und Bolzenöffnungen sowie Ventilöffnungen eingebracht sind, besteht bei dem beanspruchten Flugzeugrad die Möglichkeit ohne besonderen Mehraufwand in der Herstellung, diesen Bestandteil des Verbundrades speichenartig oder sogar mehrgliederig auszugestalten.

Bei der mehrgliederigen Auslegung der Stützstruktur, welche Stützstruktur sodann auch als mehrschalig angesprochen werden kann, ist vorgesehen, dass die Stützstruktur aus mehreren Stützstrukturteilen besteht. Dieses erlaubt beispielsweise, ein erstes Stützstrukturteil vorzusehen, mit dem der Felgenbettabschnitt dieses Radteils an die Stützstruktur des anderen Radteils angeschlossen ist. Ein zweites Stützstrukturteil ist ebenfalls an den Felgenbettabschnitt angeschlossen, jedoch mit Abstand in axialer Richtung zu dem ersten Stützstrukturteil angeordnet. Das zweite Stützstrukturteil ist zudem an das Nabenteil angeschlossen, wodurch eine direktere radiale Abstützung der äußeren Felgenbettabschnitte an dem Nabenteil möglich ist. Bei dieser Ausgestaltung kann je nach Anordnung dieses zweiten Stützstrukturteils vorgesehen sein, dass die eigentliche Krafteinleitung in die Nabe und damit in die Achse des Rades jedenfalls weitestgehend über das zweite Stützstrukturteil eingeleitet wird, während das erste Stützstrukturteil und der Anschluss desselben an das andere Radteil das Verbundradteil gegen Kippbewegungen sichert. Einem Fachmann erschließen sich aus diesem Konzept zahlreiche Möglichkeiten, die auf den Felgenbettabschnitt einwirkenden Kräfte bei einer Benutzung des Radteils über das zweite Stützstrukturteil und über das erste Stützstrukturteil und dadurch dessen Anschluss an das andere Radteil unter Ausnutzung der Stützstruktur des anderen Radteiles den jeweiligen Anforderungen entsprechend zu realisieren. Von besonderem Vorteil einer solchen zweigliedrigen Stützstruktur ist, dass in Folge einer Krafteinleitung in die Nabe über das zweite Stützstrukturteil nicht der gesamte Felgenbettabschnitt als gewichttragendes Bauteil ausgelegt zu werden braucht, sondern nur derjenige Teil des Felgenbettabschnittes, der das zweite Stützstrukturteil mit dem Felgenhorn verbindet. Dieser nicht gewichttragende Anteil des Felgenbettabschnittes ist naturgemäß hinreichend stabil auszulegen, damit dieses den bei einem Betrieb des Rades auftretenden Kippbewegungen des Radteils Stand hält. Es versteht sich, dass bei einer Ausgestaltung mit mehreren Stützstrukturteilen eine Abstützung des Felgenbettabschnittes mit einem Stützstrukturteil in radialer Richtung auch unmittelbar an und/oder unmittelbar benachbart zu dem Felgenhorn vorgesehen werden kann. Bei dieser Ausgestaltung erfolgt eine Krafteinleitung unmittelbar in das in Richtung zu dem Nabenteil sich radial innenseitig daran abstützende Stützstrukturteil. Bei dem ersten Stützstrukturteil kann es sich um einen vom Felgenbettabschnitt dieses Radteils in radialer Richtung nach innen abragenden Montageflansch handeln. Das zweite Stützstrukturteil kann, wie bereits vorstehend skizziert, zum Sparen von weiterem Gewicht, durch mehrere Speichen realisiert sein.

In einer anderen Ausgestaltung einer mehrgliedrig ausgelegten Stützstruktur ist vorgesehen, dass auch das erste Stützstrukturteil an die Nabe angebunden ist. Mithin sind bei einer solchen Ausgestaltung beide Stützstrukturteile an die Nabe angeschlossen.

Bei einer mehrgliederigen Ausgestaltung der Stützstruktur, wie vorbeschrieben, werden die unterschiedlichen Funktionalitäten derselben - drehmomentschlüssiger Anschluss an das andere Radteil und Gewichtseinleitung in das Nabenteil - auf die einzelnen Stützstrukturteile aufgeteilt. Daher können unter Berücksichtigung der jedem Stützstrukturteil zuteil werdenden Funktionalität diese hinsichtlich ihrer geometrischen Auslegung mit Blick darauf, das Flugzeugrad möglichst leichtgewichtig zu konzipieren, optimiert werden.

Aus dem Vorstehenden ergibt sich, dass eine mehrgliederige Ausbildung der Stützstruktur nicht auf zwei Stützstrukturteile beschränkt zu sein braucht, sondern auch mehr als zwei Stützstrukturteile vorgesehen sein können. Beispielsweise kann es sich bei einer sehr breiten Auslegung des Verbundradteils anbieten, den mit mehreren, voneinander beabstandeten, Stützstrukturteilen nabenseitig abzustützen.

Neben einer Herstellung der Stützstruktur insgesamt, zumindest jedoch größtenteils aus FRP-Material bietet es sich zur weiteren Gewichtsreduktion an, auch den Felgenbettabschnitt des Radteils aus FRP-Material zu fertigen. Dabei kann vorgesehen sein, dass das Felgenhorn selbst ein an das äußere Ende des aus FRP-Material gefertigten Felgenbettabschnittes angeschlossenes Metallteil ist oder dass auch das Felgenhorn aus FRP-Material gefertigt ist. Im letzteren Fall können die Notlaufeigenschaften eines solchen Radteils verbessert werden, wenn die radial nach außen weisende Seite des Felgenhorns einen Metalleinsatz oder einen Metallaufsatz trägt oder mit einer für derartige Zwecke geeigneten FRP-Material-Beschichtung ausgeführt ist. Als solche Beschichtung eignet sich beispielsweise eine Aramid-Beschichtung, wie diese beispielsweise unter der Marke KEVLAR^{®} angeboten wird.

Weitere Vorteile und Ausgestaltungen der Erfindung ergeben sich aus der nachfolgenden Beschreibung von Ausführungsbeispielen unter Bezugnahme auf die beigefügten Figuren. Es zeigen:
- **Fig. 1:**: einen schematisierten Halbschnitt durch ein Flugzeugrad gemäß einer nicht zur Erfindung gehörenden Ausgestaltung,
- **Fig. 2:**: einen schematisierten Halbschnitt eines Flugzeugrades gemäß einer ersten Ausgestaltung gemäß der Erfindung,
- **Fig. 3:**: einen schematisierten Halbschnitt durch ein Flugzeugrad gemäß noch einer weiteren Ausgestaltung gemäß der Erfindung und
- **Fig**. **4:**: einen schematisierten Halbschnitt durch ein als Verbundradteil gefertigtes Radteil für ein Flugzeugrad gemäß einer weiteren, nicht erfindungsgemäßen Ausgestaltung.

Ein zweiteiliges Flugzeugrad 1 verfügt über ein erstes Radteil 2 und ein zweites Radteil 3. Bei dem dargestellten Ausführungsbeispiel ist das erste Radteil 2 in Bezug auf eine das Flugzeugrad 1 tragende Stützstruktur (nicht dargestellt) das innenliegende Radteil. In nicht näher dargestellter Weise wirkt auf das Radteil 2 eine Bremseinrichtung. Mithin ist das Radteil 2 und damit das Flugzeugrad 1 gebremst. Das erste Radteil 2 ist bei dem dargestellten Ausführungsbeispiel aus einer hochfesten Aluminiumlegierung im Wege eines Schmiedeprozesses hergestellt worden. Das Radteil 2 verfügt über ein Felgenhorn 4, das an einem Felgenbettabschnitt 5 angeformt ist. Angeformt wiederum mit Abstand zu dem Felgenhorn 4 ist an den Felgenbettabschnitt eine Stützstruktur in Form einer Schüssel 6, die in ein Nabenteil 7 übergeht. Das Nabenteil 7 ist das radteilseitige Lagerteil eines ersten Lagers 8. Das Lager 8 ist mit seiner anderen Lagerseite an die äußere Mantelfläche einer Achse 9 angeschlossen. Die Einzelheiten dieses und auch der anderen nachfolgend beschriebenen Lager sind in den Figuren nicht dargestellt.

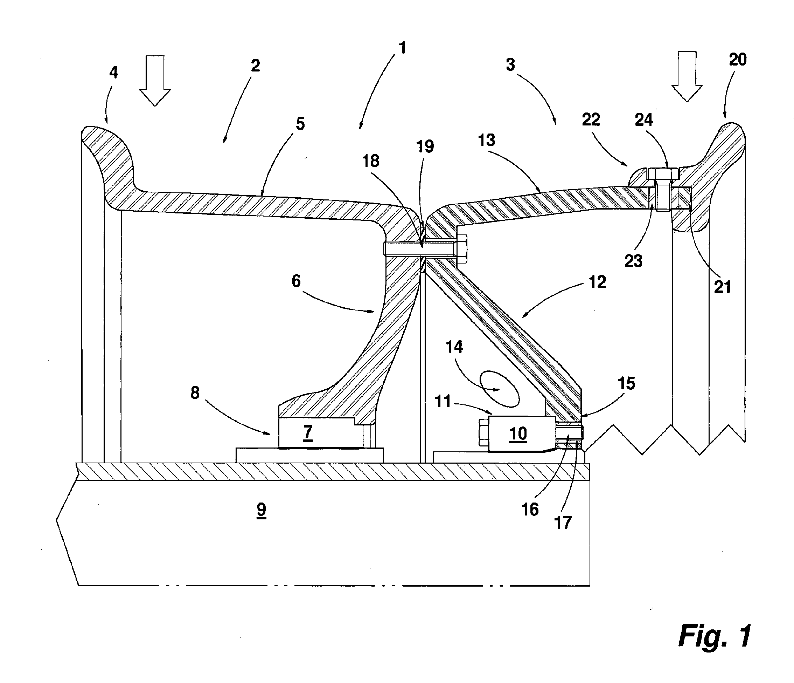

Das zweite Radteil 3, welches bei dem dargestellten Ausführungsbeispiel das äußere Radteil ist, ist als Verbundradteil gefertigt. Bei dem in Figur 1 dargestellten Ausführungsbeispiel besteht das Nabenteil 10 dieses Radteils aus einer Leichtmetalllegierung, beispielsweise einer hochfesten Aluminiumlegierung. Das Nabenteil 10 ist wiederum das radteilseitige Lagerteil eines zweiten Lagerteils 11, welches ebenso wie das Lager 8 mit seiner anderen Lagerseite auf der Achse 9 sitzt. Bei dem Radteil 3 besteht die Stützstruktur 12 sowie der Felgenbettabschnitt 13 aus einem FRP-Material. Bei dem Ausführungsbeispiel der Figur 1 ist die Stützstruktur 12 als Schüssel ausgebildet und verfügt über etliche, umfänglich verteilt angeordnete Durchbrechungen 14, die zur Belüftung und Kühlung des innenliegenden Radteiles 2 bei einem Bremsvorgang dienen. Angeformt an die Stützstruktur 13 ist ein Anschlussabschnitt 15, mit dem die Stützstruktur 12 an das Nabenteil 10 angeschlossen ist. Verbunden ist der Anschlussabschnitt 15 an das Nabenteil 10 mittels Schraubbolzen 16, die jeweils in eine in den Anschlussabschnitt 15 eingearbeitete Gewindehülse 17 eingreifen. Die Schüsseln 6 bzw. 12 der beiden Radteile 2, 3 sind derart geformt, dass diese in einem umlaufenden Abschnitt mit ihrer jeweiligen Außenseite zueinander geführt sind. In diesem Abschnitt der Schüsseln 6, 12 sind diese durch ebenfalls Schraubbolzen 18 lösbar miteinander verbunden. Bei dem dargestellten Ausführungsbeispiel greift der Gewindeabschnitt eines jeden Schraubbolzens 18 jeweils in ein in die Schüssel 6 eingebrachtes Innengewinde des ersten Radteils 2 ein. Zur Abdichtung zwischen den beiden Schüsseln 6, 12 ist zwischen diesen ein umlaufender Dichtring 19 angeordnet. Für den Fall, dass die beiden aneinandergrenzenden Abschnitte der beiden, ein Flugzeugrad bildeten Radteile hinreichend abgedichtet aneinander angrenzen, ist es nicht erforderlich, einen solchen Dichtring wie zu dem dargestellten Ausführungsbeispiel vorgesehen, einzusetzen. Zum Montieren bzw. Demontieren eines Reifens auf das Flugzeugrad 1 werden die Schraubbolzen 18 gelöst, damit die Schultern des Reifens auf die beiden Felgenbettabschnitte 5 bzw. 13 geführt werden können.

Der aus FRP-Material gefertigte Felgenbettabschnitt 13 des Verbundradteiles 3 trägt an seinem axial äußeren Ende ein aus einer hochfesten Aluminiumlegierung hergestelltes Felgenhorn 20. Dieses ist als Aufsatz bezüglich des Felgenbettabschnittes 13 ausgeführt und fasst durch eine darin eingebrachte umlaufende Nut 21 den axial äußeren Rand des FRP-Material-Felgenbettabschnittes 13 ein. In den Felgenbettabschnitt 13 sind zum Anschließen des Felgenhornbauteils 22 mehrere Gewindebuchsen 23 eingearbeitet, in die Befestigungsschrauben 24 mit ihrem Gewindeschaft eingreifen. Der Sitz der Reifenschultern auf dem Flugzeugrad 1 ist in Figur 1 mit Blockpfeilen kenntlich gemacht.

Durch Ausbilden der Stützstruktur 12 sowie des Felgenbettes 13 aus einem FRP-Material bei einem außenliegenden Radteil eines Flugzeugrades ist eine Gewichtsersparnis gegenüber herkömmlichen Radteilen, bei denen das außenliegende Radteil aus einer Aluminumlegierung hergestellt ist, bei etwa 20 % bis 25 %, was als nicht unbeachtlich angesehen wird.

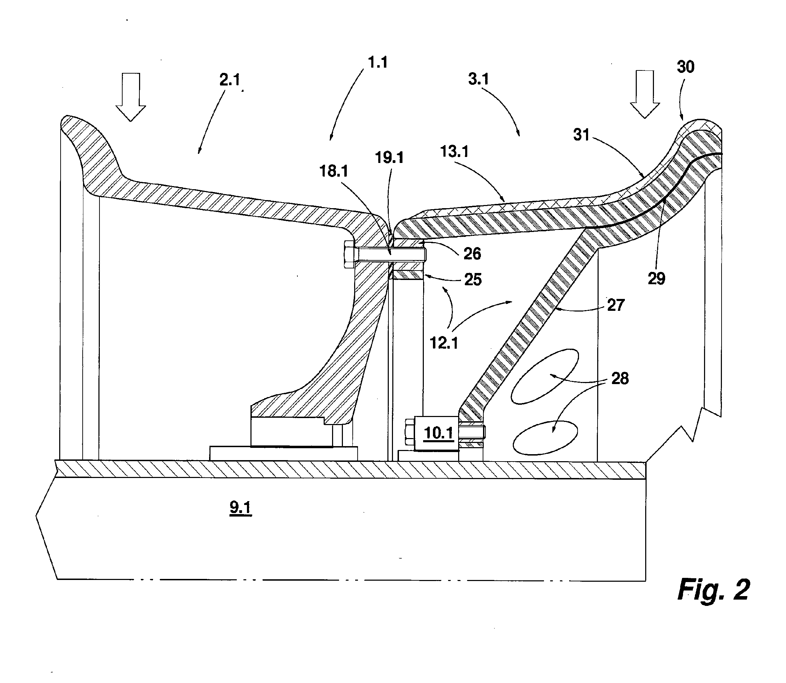

Figur 2 zeigt ein weiteres Ausführungsbeispiel eines Flugzeugrades 1.1, dessen erstes Radteil 2.1 identisch mit dem in Figur 1 beschriebenen Radteil 2 ist. Das Flugzeugrad 1.1 unterscheidet sich von dem Flugzeugrad 1 der Figur 1 durch eine andere Konzeption des als Verbundradteil gefertigten außenliegenden, zweiten Radteiles 3.1. Bei dem Verbundradteil 3.1 ist die Stützstruktur 12.1, durch die das Radteil 3.1 zum einen an das Radteil 2.1 angeschlossen und zum anderen achsseitig abgeschützt ist, zweigliedrig ausgeführt. Angeformt an das innere, zu dem Radteil 2.1 weisende Ende des aus FRP-Material gefertigten Felgenbettabschnittes 13.1 ist ein in radialer Richtung nach innen von dem Felgenbettabschnitt 13.1 abragender, umlaufender Montageflansch 25 vorgesehen. Der Montageflansch 25 bildet bei dem dargestellten Ausführungsbeispiel ein erstes Stützstrukturteil. Eingearbeitet in den ebenfalls aus FRP-Material gefertigten Montageflansch 25 sind in Abständen Gewindehülsen 26, in die die Gewindeschäfte von Schraubbolzen 18.1 zum Verbinden der beiden Radteile 2.1, 3.1 eingreifen. Zwischen den beiden Radteilen 2.1, 3.1 befindet sich ebenso wie bei dem Flugzeugrad 1 ein Dichtring 19.1.

Neben dem Montageflansch 25 als erstem Stützstrukturteil verfügt die Stützstruktur 12.1 über ein zweites Stützstrukturteil 27. Bei dem in Figur 2 dargestellten Ausführungsbeispiel ist dieses nach Art einer Schüssel konzipiert, in die Durchbrechungen 28 als Belüftungsöffnungen eingebracht sind. Das zweite Stützstrukturteil 27 stützt sich an der Unterseite des Felgenbettabschnittes 13.1 in dessen axial äußerem Abschnitt ab und verbindet diesen mit dem Nabenteil 10.1. Das zweite Stützstrukturteil 27 ist in derselben Art und Weise an das Nabenteil 10.1 angeschlossen, wie dieses zu der Stützstruktur 12 des Ausführungsbeispieles der Figur 1 beschrieben ist. Das zweite Stützstrukturteil 27 geht angrenzend an die radiale Innenseite des Felgenbettabschnittes 13.1 in einen Anlageabschnitt 29 über, der an der radialen Innenseite des Felgenbettabschnittes 13.1 und, wie aus Figur 2 ersichtlich, auch an der radialen Innenseite des Felgenhorns 30 anliegt. Verbunden ist der Felgenbettabschnitt 13.1 mit dem Anlageabschnitt 29 bei dem dargestellten Ausführungsbeispiel durch eine zwischen beiden Bauteilen 13.1, 29 befindliche Klebeverbindung.

Das Verbundradteil 3.1 des Ausführungsbeispiels der Figur 2 verfügt über einen aus FRP-Material hergestellten Felgenbettabschnitt 13.1, an den das Felgenhorn 30 angeformt ist. Mithin ist bei diesem Ausführungsbeispiel auch das Felgenhorn 30 aus FRP-Material gefertigt.

Bei dem Verbundradteil 3.1 dient die Mehrgliedrigkeit der Stützstruktur 12.1 dazu, mittels des zweiten Stützstrukturteiles 27 eine Krafteinleitung in das Nabenteil und somit in die Achse 9.1 auf direkterem Wege. Bei dem dargestellten Ausführungsbeispiel ist der eigentliche, den Felgenbettabschnitt 13.1 mit dem Nabenteil 10.1 verbindende Abschnitt des zweiten Stützstrukturteils 27 geneigt ausgeführt, um keine zu starre Abstützung zu haben. Es versteht sich jedoch, dass auch eine Konzeption möglich ist, bei der die Abstützung an der Achse 9.1 mit einem Stützstrukturteil erfolgen kann, welches in einer Querebene und somit in einer Ebene 90 Grad oder etwa 90 Grad zur Längsachse verläuft. Je nach den zu erwartenden Belastungen und der FRP-Materialauswahl wird man das zweite Stützstrukturbauteil 27 entsprechend auslegen. Über das erste Stützstrukturteil 25 wird sodann eine auf das Radteil 3.1 wirkende Kippbelastung aufgefangen. Über das erste Stützstrukturteil 25 werden die Kräfte über die Stützstruktur des anderen Radteils in die Nabe bzw. die Achse eingeleitet. Bei dem in Figur 2 beschriebenen Konzept besteht durchaus die Möglichkeit, das Bauteil mit dem zweiten Stützstrukturteil 27 und dem Anlageabschnitt 29 aus einem anderen FRP-Material oder mit anderen Komponenten als für die Realisierung des Felgenbettabschnittes 13.1 mit seinem daran angeformten ersten Stützstrukturteil 25 herzustellen. Das Vorsehen des Anlageabschnittes 29 dient zum einen zum Einleiten der Kraft in das zweite Stützstrukturteil 27. Zum anderen wird hierdurch der äußere Felgenbettabschnitt 13.1 und das Felgenhorn 30 verstärkt, und zwar in demjenigen Bereich, in dem die maßgebliche Kraft über den Reifen in das Verbundradteil 3.1 einwirkt. Der Anlageabschnitt 29 ist bei dem dargestellten Ausführungsbeispiel umfänglich mit gleicher Materialstärke ausgeführt. Alternativ kann der Anlageabschnitt ebenfalls Durchbrechungen aufweisen, ohne die Stütz- bzw. Verstärkungsfunktion einzubüßen, wodurch weiter Gewicht eingespart werden kann. Bei diesem Ausführungsbeispiel kann der Felgenbettabschnitt 13.1 insgesamt, da in großen Teilen schwächer tragend, mit einem entsprechend geringeren Materialeinsatz gefertigt werden, so dass auch diesbezüglich eine weitere Gewichtsersparnis möglich ist.

Gleichermaßen kann anstelle des in dem Ausführungsbeispiel der Figur 2 als Schüssel ausgeführten zweiten Stützstrukturteils dieses durch Speichen realisiert sein.

Die Oberseite des Felgenhorns 30 und des daran angrenzenden Felgenbettabschnittes 13.1 sind mit einer Aramid-Beschichtung, etwa einer para-Aramid-Gewebeschicht beschichtet, wodurch das Rad seine Notlaufeigenschaften für den Fall eines Reifenversagens erhält.

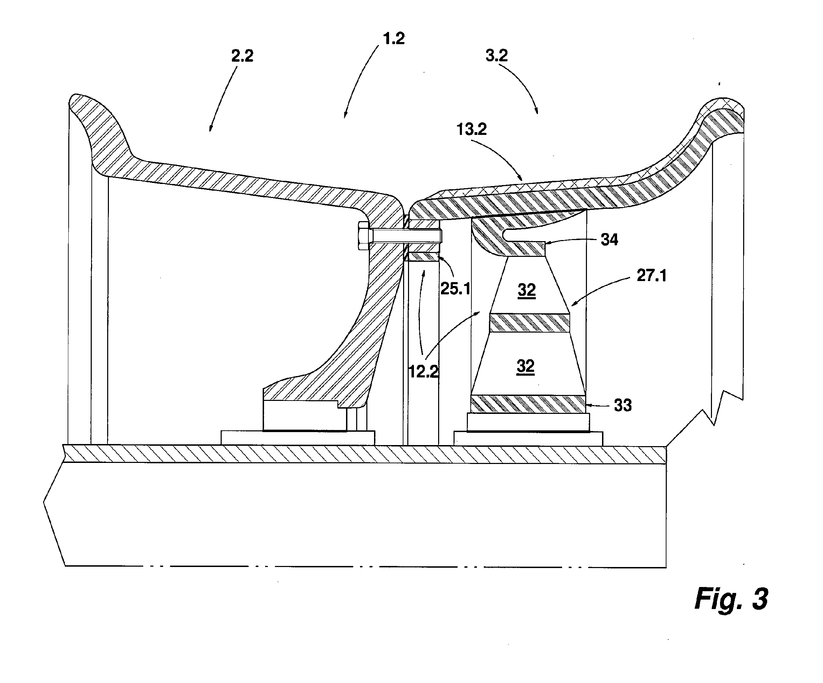

Figur 3 zeigt ein drittes Ausführungsbeispiel eines Flugzeugrades 1.2. Dieses ist prinzipiell konzipiert wie das Flugzeugrad 1.1 der Figur 2 und verfügt somit ebenfalls über eine zweigliedrige Stützstruktur 12.2. Im Folgenden sind daher nur die Unterschiede zu dem zweiten Stützstrukturteil gegenüber demjenigen des Flugzeugrades 1.1. beleuchtet. Das zweite Stützstrukturteil 27.1 des Flugzeugrades 1.2 bzw. dessen Verbundradteiles 3.2 ist durch mehrere, umfänglich verteilt angeordnete und mit Abstand zueinander vorgesehen Speichen ausgeführt. In Figur 3 ist eine solche Speiche in einem Schnitt erkennbar. Die Speichen des zweiten Stützstrukturteiles 27.1 verfügen über Querverbindungen, von denen eine im Schnitt in Figur 3 erkennbar ist. In die Speichen sind zur weiteren Gewichtsersparnis und zur Bereitstellung einer Belüftung des ersten Radteils 2.2 relativ große Durchbrechungen 32 eingebracht.

Die Speichen des zweiten Stützstrukturteiles 27.1 erstrecken sich zwischen einem radial innenliegenden Ringkörper 33, der an das Nabenteil 10.2 angeschlossen ist, und einem radial äußeren Ringkörper 34. Bei diesem Ausführungsbeispiel bildet die in Figur 3 erkennbare Innenseite des Ringkörpers 33 den Verbindungsabschnitt zum Anschließen der Stützstruktur 12.1 an das Nabenteil.

Die Ausführungsbeispiele der Flugzeugräder 1.1 und 1.2 machen deutlich, dass bei deren Verbundradteilen 3.1 bzw. 3.2 die Mehrgliedrigkeit des Stützstruktur 12.1 bzw. 12.2 zu einer Aufteilung der Radteilfunktionalitäten führt. Während der Montageflansch 25 bzw. 25.1 als erstes Stützstrukturteil benutzt wird, um das Radteil 3.1 bzw. 3.2 an das jeweilig andere Radteil 2.1 bzw. 2.2 drehmomentschlüssig und unter Abdichtung des aus den beiden Felgenbettabschnitten gebildeten Felgenbettes anzuschließen, dient das zweite Stützstrukturteil 27, 27.1 zur radialen Abstützung des jeweiligen Felgenbettabschnittes 13.1 bzw. 13.2.

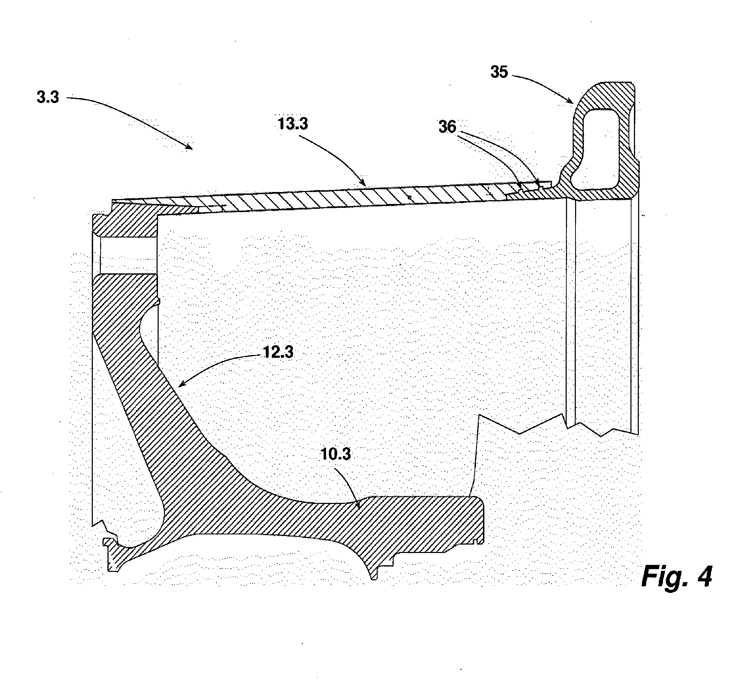

Ein weiteres, als Verbundradteil gefertigtes Radteil 3.3 ist in Figur 4 in einem Teilquerschnitt gezeigt. Bei diesem Radteil 3.3 ist die Stützstruktur 12.3 aus einer Aluminiumlegierung gefertigt. Diese ist angeformt an das Nabenteil 10.3. Bei diesem Ausführungsbeispiel ist der Felgenbettabschnitt 13.3 aus einem FRP-Material gefertigt. Der Felgenbettabschnitt 13.3 ist bei diesem Ausführungsbeispiel durch eine Klebung an den oberen Abschluss der aus Leichtmetall hergestellten Stützstruktur 12.3 angeschlossen.

Bei den in Figur 4 dargestellten Ausführungsbeispiel ist das Felgenhorn 35 aus einem Aluminiumprofil gefertigt und bei dem dargestellten Ausführungsbeispiel ebenfalls durch eine Klebeverbindung an den Felgenbettabschnitt 13.3 angeschlossen. Bei diesem Anschluss ist vorgesehen, dass die beiden Teile - Felgenhorn 35 und Felgenbettabschnitt 13.3 - durch Vorsehen von umlaufenden Verklammerungswülsten 36 in axialer Richtung formschlüssig miteinander verbunden sind. Typischerweise wird man das zur Verwendung als Felgenhorn 35 vorgesehene Profil im Wege eines Strangpressprozesses herstellen.

In noch einem weiteren Ausführungsbeispiel, welches prinzipiell demjenigen der Figur 4 entspricht, ist neben dem Felgenbettabschnitt auch das Felgenhorn aus FRP-Material gefertigt.

Bei den beschriebenen Ausführungsbeispielen sind die einzelnen miteinander verbundenen Teile des Verbundradteiles durch Schraubbolzen miteinander verbunden. Anstelle einer derartigen Verbindung können auch andere Verbindungen zum Einsatz gelangen, beispielsweise Nieten, Kleben oder dergleichen.

Es versteht sich, dass bei einem solchen Flugzeugrad auch beide Radteile als Verbundradteil, wie vorbeschrieben, gefertigt sein können.

Die Erfindung ist anhand von Ausführungsbeispielen beschrieben worden. Im Rahmen der geltenden Ansprüche ergeben sich für einen Fachmann zahlreiche weitere Ausgestaltungsmöglichkeiten, ohne dass diese im Einzelnen näher erläutert werden müssten.

### Bezugszeichenliste

| | | | |
|---|---|---|---|
| 1, 1.1, 1.2 | Flugzeugrad | 33 | Ringkörper |
| 2, 2.1, 2.2 | Radteil | 34 | Ringkörper |
| 3, 3.1, 3.2, 3.3 | Radteil | 35 | Felgenhorn |
| 4 | Felgenhorn | 36 | Verklammerungswulst |
| 5 | Felgenbettabschnitt | | |
| 6 | Schüssel | | |
| 7 | Nabenteil | | |
| 8 | Lager | | |
| 9 | Achse | | |
| 10, 10.1, 10.2, 10.3 | Nabenteil | | |
| 11 | Lagerteil | | |
| 12, 12.1, 12.2, 12.3 | Stützstruktur | | |
| 13, 13.1, 13.2, 13.3 | Felgenbettabschnitt | | |
| 14 | Durchbrechung | | |
| 15 | Anschlussabschnitt | | |
| 16 | Schraubbolzen | | |
| 17 | Gewindehülse | | |
| 18, 18.1 | Schraubbolzen | | |
| 19, 19.1 | Dichtung | | |
| 20 | Felgenhorn | | |
| 21 | Nut | | |
| 22 | Felgenhornbauteil | | |
| 23 | Gewindebuchse | | |
| 24 | Befestigungsschraube | | |
| 25 | Montageflansch, erstes Stützstrukturteil | | |
| 26 | Gewindehülse | | |
| 27, 27.1 | Schüssel, zweites Stützstrukturteil | | |
| 28 | Durchbrechung | | |
| 29 | Anlageabschnitt | | |
| 30 | Felgenhorn | | |
| 31 | para-Aramid-Gewebeschicht | | |
| 32 | Durchbrechung | | |

## Patentansprüche

1. Mehrteiliges Flugzeugrad, umfassend ein inneres Radteil (2, 2.1, 2.2) und ein äußeres Radteil (3, 3.1, 3.2, 3.3), von denen jedes ein Nabenteil (10, 10.1, 10.2, 10.3), einen Felgenbettabschnitt (5, 13, 13.1, 13.2, 13.3) und ein Felgenhorn (4, 20, 30, 35) sowie eine den Felgenbettabschnitt (5, 13, 13.1, 13.2, 13.3) mit dem Nabenteil (10, 10.1, 10.2, 10.3) verbindende Stützstruktur (6, 12, 12.1, 12.2, 12.3) aufweist, welche beiden Radteile (2, 2.1, 2.3; 3, 3.1, 3.2, 3.3) zum Ausbilden des Flugzeugrades (1, 1.1, 1.2) im Bereich ihrer Stützstruktur (6, 12, 12.1, 12.2, 12.3) lösbar mechanisch miteinander verbunden sind, wobei zumindest eines der beiden Radteile (3, 3.1, 3.2, 3.3) aus einem Verbund mehrerer Einzelteile besteht, wobei das diesem Radteil (3, 3.1, 3.2, 3.3) zugehörige Nabenteil (10, 10.1, 10.2, 10.3) ein Metallteil ist und die Stützstruktur (12, 12.1, 12.2) und/oder der Felgenbettabschnitt (13, 13.1, 13.2) mit oder ohne dem Felgenhorn (20, 30) insgesamt aus einem FRP-Material hergestellt ist, **dadurch gekennzeichnet, dass** die Stützstruktur (12.1, 12.2) mehrgliederig ausgeführt ist und über ein erstes Stützstrukturteil (25, 25.1), mit dem dieses Radteil (3.1, 3.2) an die Stützstruktur (6) des anderen Radteils (2, 2.1) angeschlossen ist, und über ein zweites Stützstrukturteil (27, 27.1) verfügt, das an das Nabenteil (10.1) angeschlossen ist.

2. Flugzeugrad nach Anspruch 1, **dadurch gekennzeichnet, dass** die Stützstruktur (12) und der Felgenbettabschnitt (13) des äußeren Radteils (3) aus FRP-Material gefertigt sind und das Felgenhorn (20) als Metallteil an den Felgenbettabschnitt (13.1) angeschlossen ist.

3. Flugzeugrad nach Anspruch 1, **dadurch gekennzeichnet, dass** die Stützstruktur (12.1, 12.2), der Felgenbettabschnitt (13.1, 13.2) und das Felgenhorn (30) des äußeren Radteils (3.1, 3.2) aus FRP-Material gefertigt sind.

4. Flugzeugrad nach einem der Ansprüche 1 bis 3, **dadurch gekennzeichnet, dass** das Radteil mit der mehrgliedrig ausgeführten Stützstruktur (12.1, 12.2) das äußere Radteil (3.1, 3.2) ist.

5. Flugzeugrad nach einem der Anspruche 1 bis 3, **dadurch gekennzeichnet, dass** das zweite Stützstrukturteil (27, 27.1) in Bezug auf seine von dem Felgenbettabschnitt (13.1, 13.2) weggerichtete Erstreckung mit axialem Abstand zu dem ersten Stützstrukturteil (25, 25.1) an den Felgenbettabschnitt (13.1, 13.2) angeschlossen ist.

6. Flugzeugrad nach Anspruch 4, **dadurch gekennzeichnet, dass** das zweite Stützstrukturteil (27) im Bereich der in axialer Richtung äußeren Hälfte des Felgenbettabschnittes (13.1) an diesen angeschlossen ist.

7. Flugzeugrad nach einem der Ansprüche 1 bis 5, **dadurch gekennzeichnet, dass** das zweite Stützstrukturteil (27.1) einen inneren Ringkörper (33), mit dem dieses Stützstrukturteil (27.1) an das Nabenteil (10.3) angeschlossen ist, und einen äußeren Ringkörper (34), mit dem dieses an den Felgenbettabschnitt (13.2) angeschlossen ist, umfasst und die beiden Ringkörper (33, 34) miteinander durch Speichen verbunden sind

8. Flugzeugrad nach einem der Ansprüche 3 bis 6, **dadurch gekennzeichnet, dass** die radial nach außen weisende Seite des aus FRP-Material gefertigten Felgenhorns (30) durch ein geforderte Notlaufeigenschaften bereitstellendes Bauteil (31) gebildet ist.

9. Flugzeugrad nach Anspruch 7, **dadurch gekennzeichnet, dass** das die Notlaufeigenschaften bereitstellende Bauteil (31) ein Metalleinsatz oder ein Metallaufsatz ist.

10. Flugzeugrad nach Anspruch 7, **dadurch gekennzeichnet, dass** das die Notlaufeigenschaften bereitstellende Bauteil (31) als Aramid-Beschichtung, insbesondere als para-Aramid-Beschichtung, insbesondere als Beschichtung mit einem para-Aramid-Gewebe ausgeführt ist.

11. Flugzeugrad nach einem der Ansprüche 1 bis 9, **dadurch gekennzeichnet, dass** die Anschlüsse der Stützstruktur (12,12.1, 12.2) des äußeren Radteils (3, 3.1, 3.2) an diejenige des inneren Radteils (2, 2.1, 2.2) mittels Schraubbolzen (18, 18.1) ausgeführt sind.

12. Flugzeugrad nach einem der Ansprüche 1 bis 10, **dadurch gekennzeichnet, dass** zumindest Teile des oder der aus FRP-Material gefertigten Stützstrukturbestandteile als FRP-Sandwichstruktur ausgeführt sind.

13. Flugzeugrad nach einem der Ansprüche 1 bis 11, **dadurch gekennzeichnet, dass** das innere Radteil (2, 2.1, 2.2) als gebremstes Radteil ausgeführt und aus einer Leichtmetalllegierung hergestellt ist, während das äußere Radteil (3, 3.1, 3.2) das Verbundradteil ist.

## Claims

1. A multipart airplane wheel comprising an inner wheel part (2, 2.1, 2.2) and an outer wheel part (3, 3.1, 3.2, 3.3), each of which has a hub part (10, 10.1, 10.2, 10.3), a rim base portion (5, 13, 13.1, 13.2, 13.3) and a rim flange (4, 20, 30, 35) as well as a support structure (6, 12, 12.1, 12.2, 12.3) which connects the rim base portion (5, 13, 13.1, 13.2, 13.3) to the hub part (10, 10.1, 10.2, 10.3), the said two wheel parts (2, 2.1, 2.3; 3, 3.1, 3.2, 3.3) being mechanically connected to each other in a detachable manner in the region of their support structure (6, 12, 12.1, 12.2, 12.3) so as to form the airplane wheel (1, 1.1, 1.2), with at least one of the two wheel parts (3, 3.1, 3.2, 3.3) consisting of a composite of multiple individual parts, with the hub part (10, 10.1, 10.2,10.3) that is associated with this wheel part (3, 3.1, 3.2, 3.3) being a metal part, and the support structure (12, 12.1, 12.2) and/or the rim base portion (13, 13.1, 13.2) with or without the rim flange (20, 30) being produced entirely from an FRP material, characterised in thatthe support structure (12.1, 12.2) is executed with a plurality of members and comprises a first support structure part (25, 25.1) by which this wheel part (3.1, 3.2) is connected to the support structure (6) of the other wheel part (2, 2.1), and a second support structure part (27, 27.1) which is connected to the hub part (10.1).

2. The airplane wheel of claim 1 characterised in thatthe support structure (12) and the rim base portion (13) of the outer wheel part (3) are produced from FRP material and the rim flange (20) as a metal part is connected to the rim base portion (13.1).

3. The airplane wheel of claim 1 characterised in thatthe support structure (12.1, 12.2), rim base portion (13.1, 13.2) and rim flange (30) of the outer wheel part (3.1, 3.2) are produced from FRP material.

4. The airplane wheel of any one of claims 1 to 3 characterised in thatthe wheel part with the support structure (12.1,12.2) that is executed with a plurality of members is the outer wheel part (3.1, 3.2).

5. The airplane wheel of any one of claims 1 to 3 characterised in thatthe extension of the second support structure part (27, 27.1) that is directed away from the rim base portion (13.1, 13.2) is connected to the rim base portion (13.1, 13.2) at an axial distance away from the first support structure part (25, 25.1).

6. The airplane wheel of claim 4 characterised in thatthe second support structure part (27) is connected to the rim base portion (13.1) in the region of the latter's axially outer half.

7. The airplane wheel of any one of claims 1 to 5 **characterised in that** the second support structure part (27.1) comprises an inner annular body (33) by which this support structure part (27.1) is connected to the hub part (10.3), and an outer annular body (34) by which this support structure part (27.1) is connected to the rim base portion (13.2), and the two annular bodies (33, 34) are interconnected by spokes.

8. The airplane wheel of any one of claims 3 to 6 **characterised in that** the radially outward-facing side of the rim flange (30) that is produced from FRP material is formed by a component (31) providing required fail-safe properties.

9. The airplane wheel of claim 7 **characterised in that** the component (31) providing the fail-safe properties is a metal insert or a metal attachment.

10. The airplane wheel of claim 7 characterised in thatthe component (31) providing the fail-safe properties is executed as an aramid coating, in particular as a para-aramid coating, more particularly as a coating having a para-aramid fibre.

11. The airplane wheel of any one of claims 1 to 9 **characterised in that** the connections of the support structure (12,12.1, 12.2) of the outer wheel part (3, 3.1, 3.2) to that of the inner wheel part (2, 2.1, 2.2) are made by means of stud bolts (18, 18.1).

12. The airplane wheel of any one of claims 1 to 10 **characterised in that** at least parts of the support structure component(s) produced from FRP material are executed as an FRP sandwich structure.

13. The airplane wheel of any one of claims 1 to 11 **characterised in that** the inner wheel part (2, 2.1, 2.2) is executed as a braked wheel part and is manufactured from a light-metal alloy whereas the outer wheel part (3, 3.1, 3.2) is the composite wheel part.

## Revendications

1. Roue d'avion en plusieurs éléments comprenant une partie de roue (2, 2.1, 2.2) intérieure et une partie de roue (3, 3.1, 3.2, 3.3) extérieure, lesquelles présentent chacune une partie moyeu (10, 10.1, 10.2, 10.3), un tronçon d'embase de jante (5, 13, 13.1, 13.2, 13.3) et un rebord de jante (4, 20, 30, 35), ainsi qu'une structure d'appui (6, 12, 12.1, 12.2, 12.3) qui relie le tronçon d'embase de jante (5, 13, 13.1, 13.2, 13.3) avec la partie moyeu (10, 10.1, 10.2, 10.3), lesquelles deux parties de roue (2, 2.1, 2.2 ; 3, 3.1, 3.2, 3.3) étant reliées mécaniquement l'une avec l'autre de manière amovible dans la zone de leur structure d'appui (6, 12, 12.1, 12.2, 12.3) pour former une roue d'avion (1, 1.1, 1.2), l'une au moins des deux parties de roue (3, 3.1, 3.2, 3.3) étant constituée d'un ensemble de plusieurs éléments individuels, la partie moyeu (10, 10.1, 10.2, 10.3) affectée à cette partie de roue (3, 3.1, 3.2, 3.3) étant un élément métallique et la structure d'appui (12, 12.1, 12.2) et/ou le tronçon d'embase de jante (13, 13.1, 13.2), avec ou sans le rebord de jante (20, 30), étant intégralement fabriqués en matériau FRP, **caractérisée en ce que** la structure d'appui (12.1, 12.2) est réalisée en plusieurs éléments et dispose d'un premier élément de structure d'appui (25, 25.1), par lequel cette partie de roue (3.1, 3.2) est raccordée à la structure d'appui (6) de l'autre partie de roue (2, 2.1), et dispose d'un second élément de structure d'appui (27, 27.1) qui est raccordé à la partie moyeu (10.1).

2. Roue d'avion selon la revendication 1, **caractérisée en ce que** la structure d'appui (12) et le tronçon d'embase de jante (13) de la partie de roue (3) extérieure sont fabriqués en matériau FRP et que le rebord de jante (20) est raccordé en tant qu'élément métallique au tronçon d'embase de jante (13.1).

3. Roue d'avion selon la revendication 1, **caractérisée en ce que** la structure d'appui (12.1, 12.2), le tronçon d'embase de jante (13.1, 13.2) et le rebord de jante (30) de la partie de roue (3.1, 3.2) extérieure sont fabriqués en matériau FRP.

4. Roue d'avion selon l'une des revendications 1 à 3, **caractérisée en ce que** la partie de roue comprenant la structure d'appui (12.1, 12.2) réalisée en plusieurs éléments est la partie de roue (3.1, 3.2) extérieure.

5. Roue d'avion selon l'une des revendications 1 à 3, **caractérisée en ce que** le second élément de structure d'appui (27, 27.1), si l'on considère son étendue s'éloignant du tronçon d'embase de jante (13.1, 13.2), est raccordé au tronçon d'embase de jante (13.1, 13.2) avec un intervalle axial par rapport au premier élément de structure d'appui (25, 25.1).

6. Roue d'avion selon la revendication 4, **caractérisée en ce que** le second élément de structure d'appui (27) est raccordé au tronçon d'embase de jante (13.1) au niveau de la moitié extérieure, considéré dans le sens axial de ce dernier.

7. Roue d'avion selon l'une des revendications 1 à 5, **caractérisée en ce que** le second élément de structure d'appui (27.1) comprend un corps annulaire (33) interne par lequel cet élément de structure d'appui (27.1) est raccordé à la partie moyeu (10.3), et un corps annulaire (34) externe, par lequel il est raccordé au tronçon d'embase de jante (13.2), et les deux corps annulaires (33, 34) sont raccordés l'un à l'autre par des rayons.

8. Roue d'avion selon l'une des revendications 3 à 6, **caractérisée en ce que** le côté radial, orienté vers l'extérieur, du rebord de jante (30) fabriqué en matériau FRP, est conformé par une pièce (31) mettant à disposition des caractéristiques obligatoires de roulement de secours.

9. Roue d'avion selon la revendication 7, **caractérisée en ce que** la pièce (31) mettant à disposition des caractéristiques de roulement de secours est un insert métallique ou une coiffe métallique.

10. Roue d'avion selon la revendication 7, **caractérisée en ce que** la pièce (31) mettant à disposition des caractéristiques de roulement de secours est réalisée avec un revêtement aramide et notamment un revêtement para-aramide, notamment en tant que revêtement avec un tissu para-aramide.

11. Roue d'avion selon l'une des revendications 1 à 9, **caractérisée en ce que** les raccordements à la structure d'appui (12, 12.1, 12.2) de la partie de roue (3, 3.1, 3.2) extérieure avec celle de la partie de roue (2, 2.1, 2.2) intérieure sont réalisés avec des boulons à visser (18, 18.1).

12. Roue d'avion selon l'une des revendications 1 à 10, **caractérisée en ce qu'**au moins certaines parties du ou des composants de la structure d'appui réalisée en matériau FRP sont réalisées en tant que structure sandwich FRP.

13. Roue d'avion selon l'une des revendications 1 à 11, **caractérisée en ce que** la partie de roue (2, 2.1, 2.2) intérieure est conformée en tant qu'élément de roue freiné et est fabriquée dans un alliage de métal léger, tandis que la partie de roue (3, 3.1, 3.2) extérieur est une partie de roue en assemblage de matériaux.
